# EUROPEAN PATENT SPECIFICATION

(11) **EP 3 805 149 B1**
(45) Date of publication and mention of the grant of the patent: **20.04.2022**
(21) Application number: 19201909.9
(22) Date of filing: 08.10.2019
(51) Int. Cl.: C01B 3/40, C01B 3/44, B01J 23/78, B01J 23/94, B01J 35/00, B01J 35/02, B01J 35/10, B01J 37/02, B01J 38/02, B01J 38/10, B01J 21/04, B01J 21/10, B01J 23/755

(54) **FLUIDIZABLE STEAM REFORMING CATALYST AND USE OF A CATALYST IN METHANE STEAM REFORMING**
FLUIDISIERBARER DAMPFREFORMIERUNGSKATALYSATOR UND VERWENDUNG EINES KATALYSATORS IN DER METHANDAMPFREFORMIERUNG
CATALYSEUR DE REFORMAGE DE VAPEUR FLUIDISABLE ET UTILISATION D'UN CATALYSEUR POUR LE REFORMAGE À LA VAPEUR DE MÉTHANE

(43) Date of publication of application: 14.04.2021
(73) Proprietor: C&CS Catalysts and Chemical Specialties GmbH, 85604 Zorneding (DE)
(72) Inventor: Nacken, Manfred, 85604 Zorneding (DE)
(74) Representative: Prinz & Partner mbB

(56) References cited:
- WO-A1-2019/015528
- US-A1- 2017 321 887
- US-B1- 10 266 405
- US-B2- 7 540 893
- WOJCIECH GAC ET AL: "Methane decomposition over Ni-MgO-Al2O3 catalysts", APPLIED CATALYSIS A: GENERAL, vol. 357, no. 2, 1 April 2009 (2009-04-01) , pages 236-243, XP055679985, AMSTERDAM, NL ISSN: 0926-860X, DOI: 10.1016/j.apcata.2009.01.029
- AHMAD EBADI ET AL: "Synthesis of Highly Dispersed Nanosized NiO/MgO-Al 2 O 3 Catalyst for the Production of Synthetic Natural Gas with Enhanced Activity and Resistance to Coke Formation", INDUSTRIAL & ENGINEERING CHEMISTRY RESEARCH, vol. 57, no. 38, 26 September 2018 (2018-09-26), pages 12700-12714, XP055680034, ISSN: 0888-5885, DOI: 10.1021/acs.iecr.8b01878

## Description

### TECHNICAL FIELD OF THE INVENTION

The invention is directed to a fluidizable steam reforming catalyst and the use of this catalyst in methane steam reforming.

### BACKGROUND OF THE INVENTION

Steam reforming of methane on industrial scale is typically performed in fixed bed reactors at high temperatures of about 800 °C using nickel catalysts. These catalysts are typically in the shape of rings with a diameter in the centimeter range to reduce the differential pressure in the fixed bed reactors.

Steam reforming of methane can be described by the reaction scheme (I), which is an equilibrium reaction.

(I) CH₄ + H₂O ⇄ CO + 3 H₂

As the steam reforming reaction is highly endothermic, high reaction temperatures are used in the state of the art to shift the equilibrium to the right side, i.e. the product side, of reaction scheme (I).

Further enhancement in hydrocarbon steam reforming can be achieved by using an additional CO₂ sorbent together with the catalyst. This process is known as sorption enhanced steam reforming and exploits the parallel water-gas shift reaction described by reaction scheme (II).

(II) CO + H₂O ⇄ CO₂ + H₂

The CO₂ sorbent adsorbs the reaction product CO₂ of the water-gas shift reaction, which results in a shift of the equilibrium of reaction scheme (II) to the product side according to the well-known Le Chatelier principle. This results in a depletion of the product CO from the steam reforming reaction (I), consequently also shifting this reaction to the product side. Therefore, an overall higher hydrogen yield can be obtained by this sorption enhanced hydrocarbon steam reforming reaction.

US 10,266,405 B1 discloses a fluidizable Nickel catalyst for steam reforming of heavy fuel oil. However, this steam reforming catalyst is operated at high temperatures between 865 and 900 °C. At this temperature the catalyst deactivates so that cyclic regeneration with oxygen is needed to re-form the catalytically active nickel oxide.

US 7,915,196 B2 shows a method of preparing an attrition resistant steam reforming catalyst based on a support containing > 90 wt.% α-Al₂O₃, < 10 wt.% NiO, < 5 wt.% MgO and < 10 wt.% K₂O with a specific surface area between 0.1 and 10 m²/g for use in biomass reforming and cracking. The catalyst exhibits a reforming and cracking activity over a period of at least 6 h at 850 °C.

Fluidized bed reactors have several advantages compared to fixed bed reactors, including uniform mixing behavior and uniform temperature gradients. Further, fluidized bed reactors allow continuous state operation of the reactor.

However, for reaching a state of sufficient fluidization within the reactor, the velocity of a fluid mixture, i.e. the reaction gas mixture, has to be carefully optimized relative to the catalyst particles. Therefore, providing a defined grain size distribution of catalyst particles is crucial for commercially successful reactor operation.

There is still a need for a fluidizable steam reforming catalyst that can be used for methane steam reforming in multicycle reforming and regeneration operations, especially at low operating temperatures, and which can be obtained in an economically efficient manner.

Moreover, the catalyst should be suitable for use in a wide variety of applications, e.g. in sorption enhanced steam reforming, which additionally uses a CO₂ adsorbent together with the catalyst.

Further, the fluidizable catalyst should allow long-term multicycle operation with acceptable costs to be competitive in the hydrogen production market based on methane steam reforming.

### SUMMARY OF THE INVENTION

It is therefore an object of the invention to provide a fluidizable steam reforming catalyst for use in methane steam reforming, having suitable thermal and chemical stability in multicycle reforming and regeneration operations that can be provided with low production costs, and which overcomes the limitations described above.

The object of the invention is solved by a fluidizable steam reforming catalyst comprising a support material loaded with a catalytically active material, wherein the support material is a particle mixture of a basic mixed metal oxide comprising MgO-Al₂O₃ having a grain size distribution in the range of from 0.05 to 0.3 mm. The catalytically active material is an oxide of nickel, and the catalyst has a specific surface area of at least 20 m²/g or more.

The term "basic" in respect to the mixed metal oxide defines the reaction behavior with acids and bases of the mixed metal oxide. A basic mixed metal oxide will react with acids but not with bases. In other words, the term "basic mixed metal oxide" denotes a mixed metal oxide with basic properties.

The inventive catalysts can be used in fluidized bed reactors due to the inherent stability of the basic mixed metal oxide and its grain size distribution of from 0.05 to 0.3 mm.

Further, the inventive catalyst allows steam reforming at low operating temperatures of from 550 to 650 °C, which is approximately 200 °C lower than the temperatures typically applied in industrial scale methane steam reforming. This reduces the cost for methane steam reforming considerably.

The high specific surface area of 20 m²/g or more provides the catalyst with sufficiently high activity to be used at low operating temperatures.

The basic mixed metal oxide support further prevents coke formation during steam reforming. This effect is based on the high electron density on the surface of the support due to the presence of basic mixed metal oxide groups on the surface. This prevents formation and/or adsorption of aromatic graphite-like carbon structures, which also exhibit high electron densities, on the surface of the support due to electronic repulsion forces.

Moreover, the basic mixed metal support shows sufficient mechanical stability during reforming as well as in regeneration cycles at higher temperatures of 850 °C. Therefore, the inventive catalyst can be used in multicycling steam reforming and regeneration. This further reduces the costs in industrial scale production of hydrogen.

The inventors found that use of a mixture of two metal oxides having different sintering temperatures can prevent a strong reduction of the specific surface area of the metal oxides during high temperature treatment, which would occur if only one type of metal oxide would be used. Therefore, the synthesis of the inventive catalyst with high specific surface areas has become possible.

Additionally, the inventive catalyst is chemically compatible with typical inorganic CO₂ absorbents which comprise CaO. This allows for using the inventive catalyst in sorption enhanced steam reforming, too.

In one embodiment of the invention, the support material is a basic mixed metal oxide having a grain size distribution in the range between 0.1 and 0.25 mm. This grain size distribution range has been found to further optimize the catalytic activity and is easily obtainable by sieving with standard sieve sizes.

The basic mixed metal oxide comprises a magnesium aluminium mixed metal oxide (MgO-Al₂O₃). A magnesium aluminium mixed metal oxide is easily obtainable from hydroxyl, carbonate or hydroxyl carbonate precursors in a decomposition and sintering process, e.g. from hydrotalcite (Mg₆Al₂(CO₃)(OH)₁₆ × 4 H₂O).

In another embodiment, the support material is a modified basic mixed metal oxide, which is obtainable by impregnating the basic mixed metal oxide precursors with a modifying agent chosen from the group consisting of γ-AlO(OH), Al(NO₃)₃ × 9 H₂O, aluminium alkoxides and mixtures thereof, and thermally treating the impregnated basic mixed metal oxide precursors.

When producing mixed metal oxides, e.g. MgO-Al₂O₃, the yield of the target fluidizable grain size fraction can be low. However, too small grain size fractions could get mixed with the product gas stream and blown out of the fluidized bed reactor and do not show sufficient stability. Too large grain size fractions are not fluidizable. However, all grain size fractions obtained during the manufacture of the support material which are not usable for the catalyst increase the production cost of the catalyst, especially if these grain size fractions would be coated with the catalytically active material, too.

Use of the modifying agent for preparing the mixed metal oxide increases the yield of the target grain size fraction of the support material considerably. The modifying agent acts as a binder for the mixed metal oxide and therefore promotes coarsening of the particle size of the support material. At the same time, the modifying agent itself forms an additional part of the modified mixed metal oxide support material and exhibits itself an intrinsic high specific surface area and/or contributes to the specific surface area of the support material after thermal treatment.

γ-AlO(OH) and Al(NO₃)₃ × 9 H₂O are commercially available at low cost, and show an excellent behavior as a modifying agent for a MgO-Al₂O₃ mixed metal oxide. Further, the mixed metal oxide support remains basic when using these modifying agents, thereby preventing coke formation during methane steam reforming.

The modifying agent can be used in an amount sufficient to form from 5 to 10 wt.% Al₂O₃, based on the total weight of the support material.

Further, the support material can be a mixture of two or more mixed metal oxides, wherein at least one of the basic mixed metal oxides has been prepared by using a modifying agent such as γ-AlO(OH) or Al(NO₃)₃ × 9 H₂O.

For example, the support material can comprise a mixture of two mixed metal oxides, wherein the two mixed metal oxides have preferably a ratio (w/w) of from 1:9 to 9:1, preferably of from 7:3 to 3:7, more preferably of from 6:4 to 4:6 and most preferably of 1:1.

Both mixed metal oxides can be modified, wherein the first modified mixed metal oxide has been modified by using γ-AlO(OH) as modifying agent and the second modified mixed metal oxide has been modified by using Al(NO₃)₃ × 9 H₂O as modifying agent.

Such mixtures of mixed metal oxides allow to use differently modified and/or unmodified support materials for further enhancing the catalytic activity. Additionally, such mixtures allow to combine different production runs of the support material, thereby increasing cost-efficient production yields of the catalyst.

The support material preferably has an apparent density of 0.5 to 1.3 kg/L. In this range, sufficiently high thermal and chemical stability of the support material is provided while maintaining a sufficiently high specific surface area under operating temperatures of the catalyst.

In one embodiment of the invention, the basic mixed metal oxide of the support material comprises MgO in an amount of 50 to 80 wt.% and Al₂O₃ in an amount of 20 to 50 wt.% based on the total mass of the support material. The ratio of MgO/Al₂O₃ can be chosen according to the desired stability and basicity of the support material, wherein higher amounts of MgO increase the basic properties of the support material.

In a further embodiment, the catalytically active material is NiO and the catalyst comprises 10 to 60 wt.%, preferably 20 to 60 wt.%, more preferably 20 to 50 wt.%, of the catalytically active material, based on the mass of the support material.

Further preferred ranges of the catalytically active material NiO are from 20 to 30 wt.% and 40 to 50 wt.%, based on the mass of the support material.

While the term "catalytically active material" refers to the as-prepared catalyst, it is well understood by the person skilled in the art that NiO is activated to form metallic Ni under the conditions of the methane steam reforming reaction, which in turn constitutes the actual catalytic material on the catalyst.

NiO is an efficient catalytically active material for methane steam reforming and can be easily supplied onto the mixed metal oxide support material by impregnating the support material with a suitable precursor, e.g. Ni(NO₃)₂ × 6 H₂O (nickel nitrate hexahydrate), and subsequent calcination at a temperature sufficient for decomposition of the precursor, preferably at a temperature of from 300 to 500 °C.

As nickel is expensive, lower amounts of the catalytically active material reduces the production costs while higher amounts increase the activity of the catalyst. However, the high specific surface area of the support material of the inventive catalysts allows to use lower amounts of NiO, too, while maintaining sufficiently high catalytic activity.

Preferably, the NiO is deposited in the form of particles on the support material, wherein the particles have a primary particle size between 5 and 50 nm as measured by high resolution scanning electron microscopy (SEM). Accordingly, the NiO is dispersed on the large surface area provided by the support material and can be accessed by the reaction gases. Smaller particles may not show sufficient multicycle stability while larger particles could show less catalytic activity, and could reduce the specific surface area of the catalyst.

The catalyst preferably has a specific surface area of 20 m²/g or more after heating for 2 hours at a temperature of 750 °C in ambient air. Therefore, the catalyst exhibits sufficient long-term stability even when exposed to high temperature, as e.g. used in regeneration steps or CO₂ desorption steps.

Further, the catalyst can have an apparent density of 0.4 to 1.4 kg/L. Accordingly, the apparent density of the catalyst and the support material are similar to each other. In other words, the specific surface area of the catalyst is kept at a high value when loading the catalytically active material onto the support material. This can be ensured by choosing a support material which is not prone to further sintering at the temperatures at which the catalytically active material is applied on the support material.

The catalyst according to the invention is preferably used in a methane steam reforming process, more preferably in a multicyclic sorbent enhanced reforming and regeneration process.

In one embodiment of the steam reforming process, the catalyst shows a catalytic activity of at least 40 kg CH₄ conversion per kilogram of catalyst per hour at a reaction temperature of 600 °C, and at a residence time of 0.0045 s in a gas mixture composed of CH₄ : H₂O : H₂: N₂ in a molar ratio of 1 : 3.676 : 0.267 : 2.457 at a steam:CH₄ molar ratio of 4.

The residence time can also be expressed in terms of the gas hourly space velocity and the conversion per kilogram of catalyst per hour as the percentage of methane conversion at this gas hourly space velocity.

Therefore, in this embodiment, the catalyst shows a CH₄ conversion of at least 60 % at a reaction temperature of 600 °C and at a gas hourly space velocity of 802000 per hour in a gas mixture composed of CH₄ : H₂O : H₂: N₂ in a molar ratio of 1 : 3.68 : 0.27 : 2.46 corresponding to a residence time of 0.0045 seconds at a steam:CH₄ molar ratio of 4.

In another embodiment, the catalyst shows a catalytic activity of at least 40 kg CH₄ conversion per kilogram of catalyst per hour at a reaction temperature of 600 °C and at a residence time of 0.0045 s in a gas mixture composed of CH₄ : H₂O : H₂ : N₂ in a molar ratio of 1 : 2.761 : 0.200 : 1.965 at a steam:CH₄ molar ratio of 3.

Expressed in terms of gas hourly space velocity and percentage of methane conversion, in this embodiment the catalyst shows a CH₄ conversion of at least 40 % at a reaction temperature of 600 °C and at a gas hourly space velocity of 803000 per hour in a gas mixture composed of CH₄ : H₂O : H₂: N₂ in a molar ratio of 1 : 2.77 : 0.20 : 1.97 corresponding to a residence time of 0.0045 seconds at a steam:CH₄ molar ratio of 3.

Therefore, even at low temperatures and at very short residence times, the inventive catalysts shows high methane conversion in gas mixtures typically used in methane steam reforming.

Further, a fixed bed reactor can be used for the methane steam reforming process. Accordingly, the inventive catalyst, though being fluidizable, is not limited to the use in fluidized bed reactors, but can also be utilized in fixed bed reactors of small bed height to avoid a too high differential pressure caused by the feed gas flowing through the fixed bed layer of the fine catalyst grains. Due to the inherent stability of the inventive catalyst, it can withstand regeneration conditions, typically used in methane steam reforming plants, especially high temperatures of 850 °C.

Preferably, a fluidized bed reactor is used for the methane steam reforming process.

To increase the overall hydrogen yield of methane steam reforming, an inorganic CO₂ sorbent can be used together with the catalyst, wherein the sorbent/catalyst weight ratio is in the range of from 1:1 to 5:1

The combined use of a catalyst with a CO₂ sorbent is also known as sorption enhanced steam reforming. The CO₂ sorbent removes the CO₂ produced in the water-gas shift reaction (see reaction scheme (II) shown above), shifting the equilibrium reactions to the desired product side.

The inorganic CO₂ sorbent can comprise an active component selected from the group consisting of MgO and CaO and mixtures thereof, in combination with alumina and/or ceria as a further material.

Due to the need of simultaneous carbonation at the temperature of steam reforming and decarbonation at a higher regeneration temperature, the inorganic CO₂ sorbent preferably comprises CaO as active component in combination with alumina, more preferably of from 30 to 40 wt.% of CaO. The inorganic CO₂ sorbent especially is based on a porous calcium aluminium oxide composition, which comprises CaO as an active component.

The inorganic CaO containing sorbent is especially suitable for use together with the inventive catalyst, as only relatively low temperatures are necessary to allow effective carbonization of the sorbent. This allows to utilize the low temperatures for methane steam reforming discussed above.

The inventive catalyst is chemically compatible with this type of inorganic CO₂ sorbent. With other words, there are no unwanted side reactions between the catalyst and the sorbent, which would reduce the stability of the catalyst.

The inorganic CO₂ sorbent preferably has a similar grain size as the catalyst, e.g. a grain size of from 0.2 to 0.3 mm. This ensures that the inorganic CO₂ sorbent is fluidizable, too, to allow the use of fluidized bed reactors for sorption enhanced reforming.

Preferably, a fluidized bed reactor is used for the methane steam reforming process, especially for a sorption enhanced reforming process.

In one embodiment of the sorbent enhanced reforming process, the catalyst shows a CH₄ conversion leading to a product gas comprising at least 98 vol.% H₂ with a sorbent/catalyst weight ratio of 3:1 at a reaction temperature of 600 °C, a pressure of 1 bar and a steam/CH₄ molar ratio of 4.

Therefore, the inventive catalyst enables the production of highly pure hydrogen from methane steam reforming, especially from sorption enhanced reforming. The mixture of sorbent and catalyst further allows to reduce the amount of expensive catalyst in the reactor while maintaining high catalytic activity and selectivity.

In a further embodiment, the catalyst shows a catalytic performance of at least 14 g CO₂ per 100 g mixture of sorbent and catalyst for at least 30 cycles in multicylic reforming operation at 650 °C with a steam/CH₄ molar ratio of 3, wherein the sorbent comprises 30 wt.% CaO and the sorbent/catalyst weight ratio is 3:2. After each reforming operation, a regeneration of the catalyst is carried out at a temperature of 850 °C in a gas mixture comprising 43 vol.% H₂O, 54 vol.% N₂ and 3 vol.% H₂.

A regeneration step is used to remove the CO₂ adsorbed on the inorganic CO₂ sorbent. The regeneration step needs a higher temperature than is used during sorption enhanced reforming. The inventive catalyst shows sufficient multicycle stability to withstand the high regeneration temperatures of about 850 °C, and to allow operation of the fluidized bed reactor for extended periods without the need to exchange the catalyst. This reduces the cost of hydrogen production by sorption enhanced reforming.

Optionally, the relatively low reaction temperature of the produced syngas should also allow a hydrogen separation by Pd membranes in the freeboard, so that a Pd membrane assisted sorption enhanced reforming process would be feasible.

### DETAILED DESCRIPTION OF PREFERRED EMBODIMENTS

Further advantages and properties of the invention become evident by the following description of preferred embodiments and the non-limiting examples provided therein.

### Definitions

The term "low-chain alcohol" defines an alcohol with up to three carbon atoms.

The term "grain size fraction" defines a fraction of the total amount of solid particles having a certain grain size and/or grain size distribution.

### Manufacture of the Support Material

### Example 1 - Support without Modifying Agent

100 g of a magnesium aluminium hydroxycarbonate in powder form with 90 wt.% or more of the powder particles having a grain size less than 90 µm was treated thermally for 2 h at 750 °C in ambient air. After thermal treatment, 60.2 g of a magnesium aluminium mixed oxide was obtained having a MgO content of 70 wt.%.

After subsequent sieving using 100 µm and 250 µm sieves, 4.06 g of a grain size fraction between 0.1 mm and 0.25 mm was obtained corresponding to a mass yield of 4.06 %, based on the total amount of magnesium aluminium hydroxycarbonate. This particle size fraction exhibited a specific surface area of 83.8 m²/g, as measured by the N₂-BET method according to DIN ISO 9277. The apparent density, also denoted volumetric density, of the obtained support material was 0.6 kg/L.

### Example 2 - Support with Modifying Agent

An alcoholic suspension of boehmite particles (AIOOH) was prepared using 10 g of a boehmite powder having a grain size in the few µm range of about 1 to 5 µm, 0.2 g concentrated HNO₃ and 74.5 g of a low-chain alcohol followed by vigorous stirring. The stabilized suspension was then added to 100 g of the same magnesium aluminium hydroxycarbonate in powder form as used in example 1 with 90 wt.% or more of the powder particles having a grain size less than 90 µm.

Thereafter, the impregnated magnesium aluminium hydroxycarbonate was dried under the hood for complete solvent evaporation and was then thermally treated for 2 h at 750 °C in ambient air to obtain 67.68 g of a magnesium aluminium mixed oxide with a MgO content of 61.5 wt.%.

After subsequent sieving using 100 µm and 250 µm sieves, 8.70 g of a grain size fraction between 0.1 mm and 0.25 mm was obtained corresponding to a mass yield of 8.70 % based on the total amount of magnesium aluminium hydroxycarbonate. This grain size fraction exhibited an apparent density of 0.6 kg/L and a specific surface area of 74.1 m²/g measured by the N₂-BET method according to DIN ISO 9277.

### Example 3 - Support with Modifying Agent

An alcoholic solution of aluminium nitrate nonahydrate was prepared by dissolving 36.5 g aluminium nitrate nonahydrate in 79.5 g of a low-chain alcohol. After complete dissolution of the Al₂O₃ precursor, the solution was added to 100 g of the same type of magnesium aluminium hydroxycarbonate in powder form as used in example 1 with 90 wt.% or more of the powder particle having a grain size less than 90 µm.

Thereafter, the impregnated magnesium aluminium hydroxycarbonate was dried under the hood for complete solvent evaporation and was then thermally treated for 2 h at 750 °C in ambient air to obtain 63.06 g of a magnesium aluminium mixed oxide with a MgO content of 64.5 wt.%.

After subsequent sieving using 100 µm and 250 µm sieves, 17.2 g of a grain size fraction between 0.1 mm and 0.25 mm was obtained corresponding to a mass yield of 17.2 % based on the total amount of magnesium aluminium hydroxycarbonate. This grain size fraction exhibited a specific surface area of 120 m²/g measured by the N₂-BET method according to DIN ISO 9277 and an apparent density of 0.6 kg/L.

### Application of the catalytic material on the support

### Example 4 - Support without Modifying Agent

Two batches of an alcoholic solution of nickel nitrate hexahydrate were prepared by dissolving 4.5 g nickel nitrate hexahydrate in 2.9 g of a low-chain alcohol for each batch, while heating and stirring the mixture up to complete dissolution of the nickel precursor.

For incipient wetness impregnation of the support material, the first nickel nitrate hexahydrate solution was added to 5 g of a magnesium aluminium mixed oxide support material prepared according to example 1 of a grain size fraction between 0.1 mm and 0.25 mm.

After homogenization of the mixture and evaporation of the solvent, the second batch of the nickel nitrate hexahydrate solution was added to the nickel nitrate hexahydrate impregnated support material followed by homogenization and complete drying.

The dried support material impregnated with the nickel nitrate hexahydrate solution was then calcined at a temperature sufficient to allow the decomposition of nickel nitrate hexahydrate to form nickel oxide.

The as-prepared catalyst powder had a grain size distribution of between 0.1 and 0.25 mm, exhibited a NiO loading of 46.2 wt.% related to the mass of the support material and contained NiO primary particles in the range between 5 and 50 nm, measured by high resolution scanning electron microscopy (SEM).

The as-prepared catalyst exhibited a specific surface area measured by the N₂-BET method according to DIN ISO 9277 of 45.3 m²/g and an apparent density of 0.85 kg/L.

### Example 5 - Support with Modifying Agent

Two batches of an alcoholic solution of nickel nitrate hexahydrate were prepared by dissolving 89.2 g nickel nitrate hexahydrate in 48.5 g of a low-chain alcohol for each batch, while heating and stirring the mixture up to complete dissolution of the nickel precursor.

For incipient wetness impregnation of the support material, the first nickel nitrate hexahydrate solution was added to 100 g of a magnesium aluminium mixed oxide support material prepared according to example 2 of a grain size fraction between 0.1 mm and 0.25 mm.

After homogenization of the mixture and evaporation of the solvent, the second batch of the nickel nitrate hexahydrate solution was added to the nickel nitrate hexahydrate impregnated support material followed by homogenization and complete drying.

The dried support material impregnated with the nickel nitrate hexahydrate solution was then calcined at a temperature sufficient to allow the decomposition of nickel nitrate hexahydrate to form nickel oxide.

The as-prepared catalyst powder had a grain size distribution between 0.1 mm and 0.25 mm, exhibited a NiO loading of 45.8 wt.% related to the mass of the support material and contained NiO primary particles in the range between 20 and 30 nm, measured by high resolution SEM.

The as-prepared catalyst exhibited a specific surface area measured by the N₂-BET method according to DIN ISO 9277 of 62.4 m²/g and an apparent density of 0.85 kg/L.

After thermal treatment of the as-prepared catalyst for 2 h at 750 °C in ambient air the specific surface area of the catalyst is preserved at a similar value of 64.8 m²/g.

### Example 6 - Support with modifying agent

Two batches of an alcoholic solutions of nickel nitrate hexahydrate were prepared by dissolving 6.70 g nickel nitrate hexahydrate in 3.95 g of a low-chain alcohol for each batch, while heating and stirring the mixture up to complete dissolution of nickel precursor.

For incipient wetness impregnation of the support material, the first nickel nitrate hexahydrate solution was added to 7.5 g of a magnesium aluminium mixed oxide support material prepared according to example 3 of a grain size fraction between 0.1 mm and 0.25.

After homogenization of the mixture and evaporation of the solvent, the second batch of the nickel nitrate hexahydrate solution was added to the nickel nitrate hexahydrate impregnated support material followed by complete drying.

The dried support material impregnated with the nickel nitrate hexahydrate solution was then calcined at a temperature sufficient to allow the decomposition of nickel nitrate hexahydrate to form nickel oxide.

The as-prepared catalyst powder had a grain size distribution of between 0.1 and 0.25 mm and exhibited a NiO loading of 45.9 wt.% related to the mass of the support material.

The as-prepared catalyst exhibited a specific surface area measured by the N₂-BET method according to DIN ISO 9277 of 71.9 m²/g and an apparent density of 0.85 kg/L.

After thermal treatment of the as-prepared catalyst for 2 h at 750 °C in ambient air the specific surface area of this catalyst is preserved at a similar value of 71.1 m²/g.

### Example 7 - Mixture of Supports with Modifying Agents

50 g of magnesium aluminium mixed oxide support material prepared according to example 2 and 50 g of a magnesium aluminium mixed oxide support material prepared according to example 3 are mechanically mixed to obtain a combined support material. The combined support material therefore had a mass yield of the target grain size fraction of between 0.1 and 0.25 mm of 13% related to the total amount of the used magnesium aluminium hydroxycarbonate, wherein the mass yield is calculated based on the individual mass yields according to examples 2 and 3 and the weight ratio of the two support materials in the combined support material.

Two batches of an alcoholic solution of nickel nitrate hexahydrate were prepared by dissolving 89.2 g nickel nitrate hexahydrate in 48.5 g of a low-chain alcohol for each batch, while heating up and stirring the mixture up to complete dissolution of the nickel precursor.

For incipient wetness impregnation of the support material, the first nickel nitrate hexahydrate solution was added to the 100 g magnesium aluminium mixed oxide support material obtained above in this example.

After homogenization of the mixture and evaporation of the solvent, the second batch of the nickel nitrate hexahydrate solution was added to the nickel nitrate hexahydrate impregnated support material followed by homogenization and complete drying.

The dried support material impregnated with the nickel nitrate hexahydrate solution was then calcined at a temperature sufficient to allow the decomposition of nickel nitrate hexahydrate to form nickel oxide.

The as-prepared catalyst powder had a grain size distribution between 0.1 and 0.25 mm and exhibited a NiO loading of 45.8 wt.% related to the mass of the support material..

The as-prepared catalyst exhibited a specific surface area measured by the N₂-BET method according to DIN ISO 9277 of 58.5 m²/g and an apparent density of 0.85 kg/L.

### Example 8 - Mixture of Supports with and without Modifying Agent

50 g of magnesium aluminium mixed oxide support material prepared according to example 1 with a MgO content of 70 wt.% and 50 g of a magnesium aluminium mixed oxide prepared according to example 2 with a MgO content of 61.5 wt.% are mechanically mixed to obtain a combined support material with a mass yield of the target grain size fraction of between 0.1 and 0.25 mm of 6.4 % related to the total amount of the used magnesium aluminium hydroxycarbonate, wherein the mass yield is calculated based on the individual mass yields according to examples 1 and 2 and the weight ratio of the two support materials in the combined support material.

Two batches of an alcoholic solution of nickel nitrate hexahydrate were prepared by dissolving 89.6 g nickel nitrate hexahydrate in 53.3 g of a low-chain alcohol for each batch, while heating up and stirring the mixture up to complete dissolution of the nickel precursor.

For incipient wetness impregnation of the support material, the first nickel nitrate hexahydrate solution was added to the above obtained 100 g magnesium aluminium mixed oxide support material.

After homogenization of the mixture and evaporation of the solvent, the second batch of the nickel nitrate hexahydrate solution was added to the nickel nitrate hexahydrate impregnated support material followed by homogenization and complete drying.

The dried support material impregnated with the nickel nitrate hexahydrate solution was then calcined at a temperature sufficient to allow the decomposition of nickel nitrate hexahydrate to form nickel oxide.

The as-prepared catalyst powder had a grain size distribution between 0.1 and 0.25 mm and exhibited a NiO loading of 46 wt.% related to the mass of the support material.

The as-prepared catalyst exhibited a specific surface area measured by the N₂-BET method according to DIN ISO 9277 of 53.9 m²/g and an apparent density of 0.85 kg/L.

### Example 9 - Mixture of Supports with and without Modifying Agent

50 g of magnesium aluminium mixed oxide support material prepared according to example 1 with a MgO content of 70 wt.% and 50 g of a magnesium aluminium mixed oxide prepared according to example 3 with a MgO content of 64.5 wt.% are mechanically mixed to obtain a combined support material with a mass yield of the target grain size fraction of between 0.1 and 0.25 mm of 10.6 % related to the total amount of the used magnesium aluminium hydroxycarbonate, wherein the mass yield is calculated based on the individual mass yields according to examples 1 and 3 and the weight ratio of the two support materials in the combined support material.

Two batches of an alcoholic solution of nickel nitrate hexahydrate were prepared by dissolving for each solution 89.7 g nickel nitrate hexahydrate in 55.3 g of a low-chain alcohol for each batch, while heating up and stirring the mixture up to complete dissolution of the nickel precursor.

For incipient wetness impregnation of the support material, the first nickel nitrate hexahydrate solution was added to the above obtained 100 g magnesium aluminium mixed oxide support material.

After homogenization of the mixture and evaporation of the solvent, the second batch of the nickel nitrate hexahydrate solution was added to the nickel nitrate hexahydrate impregnated support material followed by homogenization and complete drying.

The dried support material impregnated with the nickel nitrate hexahydrate solution was then calcined at a temperature sufficient to allow the decomposition of nickel nitrate hexahydrate to form nickel oxide.

The as-prepared catalyst powder had a grain size distribution between 0.1 and 0.25 mm and exhibited a NiO loading of 46.1 wt.% related to the mass of the support material.

The as-prepared catalyst exhibited a specific surface area measured by the N₂-BET method according to DIN ISO 9277 of 58.6 m²/g and an apparent density of 0.85 kg/L.

### Example 10 - Single Incipient Wetness Impregnation

A batch of an alcoholic solution of nickel nitrate hexahydrate were prepared by dissolving 109 g nickel nitrate hexahydrate in 59.2 g of a low-chain alcohol, while heating and stirring the mixture up to complete dissolution of the nickel precursor.

For incipient wetness impregnation of the support material, the nickel nitrate hexahydrate solution was added to 100 g of a magnesium aluminium mixed oxide support material prepared according to example 2 of a grain size fraction between 0.1 and 0.25 mm.

After homogenization of the mixture and evaporation of the solvent, the impregnated completely dried support material was then calcined at a temperature sufficient to allow the decomposition of nickel nitrate hexahydrate to form nickel oxide.

The as-prepared catalyst powder had a grain size distribution between 0.1 and 0.25 mm, exhibited a NiO loading of 28 wt.% related to the mass of the support material and contained NiO primary particles in the range between 15 and 25 nm, measured by high resolution SEM.

The as-prepared catalyst exhibited a specific surface area measured by the N₂-BET method according to DIN ISO 9277 of 65.0 m²/g and an apparent density of 0.70 kg/L.

From examples 1 to 3 shown above, it becomes clear that the mass yield of the desired grain size fraction between 0.1 mm and 0.25 mm can be increased by more than 100% in the manufacture of the support material by using a modifying agent. This promotes use of this distinct grain size fraction in fluidized bed reactors in an economically efficient manner in the first place.

As becomes evident from the above examples 4 to 10, the embodiments of the inventive catalyst exhibit high specific surface areas of 20 m²/g or more and up to 72 m²/g, even after heat treatment at 750 °C for 2 hours in ambient air.

The support materials before loading of the NiO catalyst show even higher specific surface areas of up to 120 m²/g (examples 1 to 3).

The inventors contemplate that the reduction of the specific surface area after application of the NiO catalyst is mostly due to partial blocking of the high surface area of the support by the NiO particles. As the NiO precursors decompose at much lower temperatures than the sintering temperatures of the support material, no sintering effect of the support material itself is expected during application of the catalyst. This effect is further evidenced by the nearly constant specific surface area after 2 hours at 750 °C, which also shows the general chemical and thermal stability of the synthesized catalyst.

Examples 4 to 10 further show that high NiO loadings can be achieved using a two-step impregnation process. For comparison, in Example 10 only a single impregnation step was done, which resulted in approximately 20 wt.% less of NiO in the obtained catalyst.

However, the lower NiO content of 28 wt.% of example 10 is still in the range of typically used nickel catalysts known in the art. Further, as nickel precursors are expensive, the use of less nickel might even be desirable when planning a reactor design.

At the same time, the inventive catalyst makes it possible to achieve much higher nickel contents in the inventive catalyst if desired, while maintaining a high specific surface area.

### Performance of the catalyst

### Example 11 - Steam reforming performance before and after regeneration

The catalytic activity of the inventive catalyst obtained by example 5 after catalyst activation, i.e. after complete reduction of NiO to metallic Ni, was measured in kilogram CH₄ conversion per kilogram of catalyst per hour in a fixed bed reactor at different reaction temperatures and two different H₂O/CH₄ ratios using a gas mixture of CH₄, H₂O, H₂ and N₂.

Additionally, the performance before and after regeneration at 850 °C for 1 h with a gas mixture of H₂O, H₂ and N₂ was tested.

As reference catalyst, a Nickel catalyst loaded on a magnesium aluminate (MgAl₂O₄) spinel support with a grain size fraction between 0.1 and 0.25 mm was used. The reference catalyst had a specific surface area of 4.4 m²/g and a NiO loading of 22.9 wt.%. This type of catalyst is representative for the catalysts typically used in industrial plants as known in the prior art.

**Table 1: Catalytic activity in fixed bed operation.**

| CH₄ reforming at H₂O/CH₄ = 4 | T [°C] | Residence Time [s] | Catalytic activity of inventive catalyst | Catalytic activity of reference catalyst |
|---|---|---|---|---|
| | | | [kg CH₄ conversion / kg catalyst/ h] | [kg CH₄ conversion / kg catalyst/ h] |
| Before regeneration | 600 | 0.0045 | 53.7 | - |
| Before regeneration | 584 | 0.0061 | - | 5.92 |
| Before regeneration | 550 | 0.0042 | 38.0 | - |
| Before regeneration | 537 | 0.0057 | - | 1.54 |
| Before regeneration | 648 | 0.0048 | 69.6 | - |
| Before regeneration | 627 | 0.0064 | - | 8.77 |
| After regeneration | 654 | 0.0048 | 26.7 | - |
| After regeneration | 640 | 0.0064 | - | 0.00 |

Gas composition used in reforming test: CH₄ : H₂O : H₂: N₂ = 1 : 3.675 : 0.27 : 2.25 (537 - 550°C) / 2.46 (584 - 600°C) / 2.67 (640 - 654°C); H₂O-H₂-N₂ gas mixture used for regeneration: H₂O / H₂ = 15, N₂: 41 vol.%; flow rate: 0.8 m/s.

**Table 2: Catalytic activity in fixed bed operation.**

| CH₄ reforming at H₂O/CH₄ = 3 | T [°C] | Residence Time [s] | Catalytic activity of inventive catalyst | Catalytic activity of reference catalyst |
|---|---|---|---|---|
| | | | [kg CH₄ conversion / kg catalyst/ h] | [kg CH₄ conversion / kg catalyst/ h] |
| Before regeneration | 600 | 0.0045 | 48.0 | - |
| Before regeneration | 583 | 0.0061 | - | 5.66 |
| Before regeneration | 550 | 0.0042 | 32.5 | - |
| Before regeneration | 537 | 0.0057 | - | 1.60 |
| Before regeneration | 647 | 0.0047 | 60.1 | - |
| Before regeneration | 622 | 0.0064 | - | 13.82 |
| After regeneration | 652 | 0.0047 | 22.7 | - |
| After regeneration | 640 | 0.0064 | - | 0.00 |

Gas composition used in reforming test: CH₄ : H₂O : H₂: N₂ = 1 : 2.76 : 0.20 : 1.80 (537 - 550°C) / 1.97 (583 - 600°C) / 2.14 (622 - 652°C); H₂O-H₂-N₂ gas mixture used for regeneration: H₂O / H₂ = 15, N₂: 41 vol.%; flow rate: 0.8 m/s.

As becomes evident from Tables 1 and 2, the inventive catalyst shows a much higher catalytic activity at low temperatures in the range of from approximately 550 to 650 °C than the reference catalyst.

Additionally, the inventive catalyst shows high activity even after regeneration at 850 °C for 1 hour. In contrast, the reference catalyst shows a strong decrease in catalytic activity after regeneration. Further, the activity of the inventive catalyst is higher even after the regeneration step than the activity of the reference catalyst before regeneration.

The catalytic activity at 600 °C of the inventive catalyst of this example versus the reference catalyst at the two H₂O/CH₄ ratios can also be expressed in percentage CH₄ conversion related to the input flow of methane as function of the gas hourly space velocity as presented hereafter.

**Table 3: Catalytic activity in fixed bed operation.**

| CH₄ reforming | H₂O/CH₄ | T[°C] | Gas hourly space velocity [h⁻¹] | CH₄ conversion of Inventive catalyst [%] | CH₄ conversion of Inventive catalyst [%] |
|---|---|---|---|---|---|
| Inventive catalyst | 4 | 600 | 802214 | 72.2 | - |
| Reference catalyst | 4 | 584 | 592540 | - | 16.2 |
| Inventive catalyst | 3 | 600 | 803139 | 51.6 | - |
| Reference catalyst | 3 | 583 | 593223 | - | 12.4 |

### Example 12 - Sorption enhanced steam reforming in fluidized bed operation

The catalytic activity of the inventive catalyst of example 5 after catalyst activation, i.e. after complete reduction of NiO to metallic Ni, was tested in sorption enhanced reforming fluidized bed operation by using a mixture of an inorganic fluidizable 30 wt.% CaO containing CO₂ sorbent (grain size fraction of from 0.2 to 0.3 mm) and the inventive fluidizable catalyst of example 5 in a weight ratio of 3:1.

The fluidized bed sorption enhanced steam reforming test of methane was performed with a first fluidized bed sorption enhanced steam reforming cycle at 600 °C, 1.3 bar, a H₂O/CH₄ ratio of 4 and applying a fluidization velocity between 0.042 and 0.069 m/s. In this first cycle, an H₂ content of at least 98% near the equilibrium value was achieved.

After the first reforming cycle, a fluidized bed regeneration cycle at 850 °C using a gas mixture of 57.5 vol.% H₂O, 40.1 vol.% N₂ and 2.4 vol.% H₂ was performed to release adsorbed CO₂.

After that, a second sorption enhanced steam reforming cycle was performed under the conditions of the first reforming cycle. In this second cycle, also an H₂ content of at least 98 vol.% was achieved in the produced gas.

This indicates the stability of the inventive catalyst in cycling fluidized bed sorption enhanced steam reforming operation of methane.

### Example 13 - Multicycling sorption enhanced steam reforming TGA test

The catalytic activity of this inventive catalyst of example 5 after catalyst activation, i.e. after complete reduction of NiO to metallic Ni, was further measured in comparison to the reference catalyst of example 11 in a multicycle sorption enhanced methane steam reforming test in a mixture with an inorganic fluidizable CO₂ sorbent, containing 30 wt.% CaO, in a sorbent/catalyst weight ratio of 3:2.

One cycle consists of CO₂ sorption enhanced steam reforming of methane at a H₂O/CH₄ ratio of 3 at 650 °C followed by subsequent regeneration at 850 °C in a gas mixture with 43 vol.% H₂O, 3 vol.% H₂ and 54 vol.% N₂ for complete removal of bonded CO₂.

Sorption of generated CO₂ in sorption enhanced steam reforming of methane was measured by TGA (thermogravimetric analysis) in grams CO₂ per 100 g sorbent-catalyst mixture in the reforming step of each cycle, and a total of 30 cycles were performed. The obtained results are presented in Table 4.

**Table 4: Multicycle performance in sorption enhanced steam reforming**

| | 2nd cycle | 5th cycle | 15th cycle | 20th cycle | 30th cycle |
|---|---|---|---|---|---|
| CO₂ sorption capacity of inventive catalyst | 16.2 | 16.8 | 16.8 | 16.6 | 16.2 |
| [g CO₂ /100 g sorbent-catalyst mixture] | | | | | |
| CO₂ sorption capacity of reference catalyst | 13.8 | 13.6 | 9.2 | 7 | 6.2 |
| [g CO₂ /100 g sorbent-catalyst mixture] | | | | | |

As becomes evident from Table 4, the sorbent-catalyst mixture using the inventive catalyst shows constant CO₂ sorption capacity of at least 14 g CO₂ per 100 g sorbent-catalyst mixture over a total of 30 cycles.

In contrast, the sorbent-catalyst mixture using the reference catalyst continuously decreases in CO₂ sorption capacity.

As the amount of produced CO₂ in sorption enhanced steam reforming is directly connected to the catalytic activity, this further illustrates the long-term thermal and chemical stability and activity of the inventive catalyst. In contrast, the reference catalysts constantly loses catalytic activity over the course of 30 cycles.

## Claims

1. Fluidizable steam reforming catalyst comprising a support material loaded with a catalytically active material,
wherein the support material is a particle mixture of a basic mixed metal oxide comprising MgO-Al₂O₃ having a grain size distribution in the range of from 0.05 to 0.3 mm,
wherein the catalytically active material is an oxide of nickel and
wherein the catalyst has a specific surface area of at least 20 m²/g or more.

2. Catalyst according to claim 1, wherein the support material is a basic mixed metal oxide having a grain size distribution in the range between 0.1 and 0.25 mm.

3. Catalyst according to any of the preceding claims, wherein the support material comprises or consists of a modified basic mixed metal oxide, which is obtainable by impregnating basic mixed metal oxide precursors with a modifying agent chosen from the group consisting of γ-AlO(OH), Al(NO₃)₃ × 9 H₂O and mixtures thereof and thermally treating the impregnated basic mixed metal oxide precursors.

4. Catalyst according to claim 3, wherein the support material is a mixture, preferably a 1:1 (w/w) mixture, of two basic mixed metal oxides, wherein at least one of the two basic mixed metal oxides has been modified by using γ-AlO(OH) or Al(NO₃)₃ × 9 H₂O as modifying agent, and wherein the two mixed metal oxides have a ratio (w/w) of from 1:9 to 9:1, preferably of from 7:3 to 3:7, more preferably of from 6:4 to 4:6 and most preferably of 1:1.

5. Catalyst according to any of the preceding claims, wherein the support material has an apparent density of 0.5 to 1.3 kg/L.

6. Catalyst according to any of the preceding claims, wherein the basic mixed metal oxide of the support material comprises MgO in an amount of 50 to 80 wt.% and Al₂O₃ in an amount of 20 to 50 wt.%, based on the mass of the support material.

7. Catalyst according to any of the preceding claims, wherein the catalytically active material is NiO and the catalyst comprises 10 to 60 wt.%, preferably 20 to 60 wt.%, more preferably 20 to 50 wt.%, of the catalytically active material, based on the mass of the support material.

8. Catalyst according to claim 7, wherein the catalyst comprises from 20 to 30 wt.% or from 40 and 50 wt.% of the catalytically active material, based on the mass of the support material.

9. Catalyst according to any of the preceding claims, wherein the catalytically active material is deposited in the form of particles on the support material, wherein the particles have a primary particle size between 5 and 50 nm.

10. Catalyst according to any of the preceding claims, wherein the catalyst has a specific surface area of 20 m²/g or more after 2h in ambient air at a temperature of 750°C.

11. Catalyst according to any of the preceding claims, wherein the catalyst has an apparent density of 0.4 to 1.4 kg/L.

12. Use of the catalyst of any of the preceding claims in methane steam reforming, preferably at an operating temperature of from 550 to 650 °C, more preferably in multicycling steam reforming and regeneration.

13. Use according to claim 12, wherein a fluidized bed reactor is used for methane steam reforming, preferably wherein an inorganic CO₂ sorbent is used together with the catalyst.

14. Use according to claim 12 or 13, wherein the catalyst is used together with an inorganic CO₂ sorbent, preferably wherein the inorganic CO₂ sorbent comprises CaO and at least one of alumina and ceria, more preferably of from 30 to 40 wt.% CaO and the reminder alumina, and the sorbent/catalyst weight ratio is in the range of 1:1 to 5:1.

15. Use according to anyone of claims 12 to 14, wherein the catalyst shows a catalytic activity of at least 40 kg CH₄ conversion per kilogram of catalyst per hour at a reaction temperature of 600 °C and at a residence time of 0.0045 s in a gas mixture composed of CH₄ : H₂O : H₂: N₂ in a molar ratio of 1 : 3.676 : 0.267 : 2.457 at a steam:CH₄ molar ratio of 4.

16. Use according anyone of claims 12 to 14, wherein the catalyst shows a catalytic activity of at least 40 kg CH₄ conversion per kilogram of catalyst per hour at a reaction temperature of 600°C and at a residence time of 0.0045 s in a gas mixture composed of CH₄ : H₂O : H₂: N₂ in a ratio of 1 : 2.761 : 0.200 : 1.965 at a steam:CH₄ ratio of 3.

17. Use according to anyone of claims 12 to 14, wherein the catalyst shows a CH₄ conversion leading to a product gas comprising at least 98 vol.% H₂ with a sorbent/catalyst weight ratio of 3:1 at a reaction temperature of 600 °C, a pressure of 1 bar and a steam/CH₄ ratio of 4, or
wherein the catalyst shows a catalytic performance of at least 14 g CO₂/ 100 g mixture of sorbent and catalyst for at least 30 cycles in multicylic reforming operation at 650 °C with a steam/CH₄ ratio of 3, wherein the sorbent comprises 30 wt.% CaO, and the sorbent/catalyst weight ratio is 3:2, and wherein after each reforming operation a regeneration of the catalyst is carried out at a temperature of 850°C in a gas mixture comprising H₂O, N₂ and H₂.

## Patentansprüche

1. Fluidisierbarer Dampfreformierungskatalysator, der ein mit einem katalytisch aktiven Material beladenes Trägermaterial umfasst,
wobei das Trägermaterial ein Teilchengemisch aus einem basischen Mischmetalloxid ist, das MgO-Al₂O₃ mit einer Korngrößenverteilung im Bereich von 0,05 bis 0,3 mm umfasst,
wobei das katalytisch aktive Material ein Oxid von Nickel ist und
wobei der Katalysator eine spezifische Oberfläche von mindestens 20 m²/g oder mehr aufweist.

2. Katalysator nach Anspruch 1, wobei das Trägermaterial ein basisches Mischmetalloxid mit einer Korngrößenverteilung im Bereich zwischen 0,1 und 0,25 mm ist.

3. Katalysator nach einem der vorhergehenden Ansprüche, wobei das Trägermaterial ein modifiziertes basisches Mischmetalloxid umfasst oder daraus besteht, das durch Tränkung basischer Mischmetalloxidvorläufer mit einem Modifikator, der aus der aus γ-AlO(OH), Al(NO₃)₃ × 9 H₂O und Mischungen davon bestehenden Gruppe ausgewählt ist, und durch Wärmebehandlung der getränkten basischen Mischmetalloxidvorläufer erhältlich ist.

4. Katalysator nach Anspruch 3, wobei das Trägermaterial ein Gemisch, vorzugsweise ein 1:1-Gemisch (Gewichtsanteil) aus zwei basischen Mischmetalloxiden ist, wobei mindestens eines der beiden basischen Mischmetalloxide unter Verwendung von γ-AlO(OH) oder Al(NO₃)₃ × 9 H₂O als Modifikator modifiziert wurde und wobei die beiden Mischmetalloxide ein Verhältnis (Gewichtsanteil) von 1:9 bis 9:1, vorzugsweise von 7:3 bis 3:7, bevorzugter von 6:4 bis 4:6 und am bevorzugtesten von 1:1 aufweisen.

5. Katalysator nach einem der vorhergehenden Ansprüche, wobei das Trägermaterial eine Schüttdichte von 0,5 bis 1,3 kg/l aufweist.

6. Katalysator nach einem der vorhergehenden Ansprüche, wobei das basische Mischmetalloxid des Trägermaterials MgO in einer Menge von 50 bis 80 Gew.-% und Al₂O₃ in einer Menge von 20 bis 50 Gew.-%, bezogen auf die Masse des Trägermaterials, umfasst.

7. Katalysator nach einem der vorhergehenden Ansprüche, wobei das katalytisch aktive Material NiO ist und der Katalysator 10 bis 60 Gew.-%, vorzugsweise 20 bis 60 Gew.-%, bevorzugter 20 bis 50 Gew.-%, des katalytisch aktiven Materials, bezogen auf die Masse des Trägermaterials, umfasst.

8. Katalysator nach Anspruch 7, wobei der Katalysator 20 bis 30 Gew.-% oder 40 bis 50 Gew.-% des katalytisch aktiven Materials, bezogen auf die Masse des Trägermaterials, umfasst.

9. Katalysator nach einem der vorhergehenden Ansprüche, wobei das katalytisch aktive Material in Form von Teilchen auf dem Trägermaterial abgeschieden ist, wobei die Teilchen eine Primärteilchengröße zwischen 5 und 50 nm haben.

10. Katalysator nach einem der vorhergehenden Ansprüche, wobei der Katalysator nach zwei Stunden in Umgebungsluft bei einer Temperatur von 750°C eine spezifische Oberfläche von 20 m²/g oder mehr aufweist.

11. Katalysator nach einem der vorhergehenden Ansprüche, wobei der Katalysator eine Schüttdichte von 0,4 bis 1,4 kg/L aufweist.

12. Verwendung des Katalysators nach einem der vorhergehenden Ansprüche bei der Dampfreformierung von Methan, vorzugsweise bei einer Betriebstemperatur von 550 bis 650°C, bevorzugter bei der multizyklischen Dampfreformierung und Regenerierung.

13. Verwendung nach Anspruch 12, wobei ein Wirbelschichtreaktor für die Dampfreformierung von Methan verwendet wird, vorzugsweise wobei ein anorganisches CO₂-Sorptionsmittel zusammen mit dem Katalysator verwendet wird.

14. Verwendung nach Anspruch 12 oder 13, wobei der Katalysator zusammen mit einem anorganischen CO₂-Sorptionsmittel verwendet wird, vorzugsweise wobei das anorganische CO₂-Sorptionsmittel CaO und Aluminiumoxid und/oder Cerdioxid umfasst, bevorzugter 30 bis 40 Gew.-% CaO und als Rest Aluminiumoxid, und wobei das Sorptionsmittel/Katalysator-Gewichtsverhältnis im Bereich von 1:1 bis 5:1 liegt.

15. Verwendung nach einem der Ansprüche 12 bis 14, wobei der Katalysator eine katalytische Aktivität von mindestens 40 kg CH₄-Umsetzung pro Kilogramm Katalysator pro Stunde bei einer Reaktionstemperatur von 600°C und einer Verweilzeit von 0,0045 s in einem aus CH₄ : H₂O : H₂ : N₂ in einem Molverhältnis von 1 : 3,676 : 0,267 : 2,457 bestehenden Gasgemisch bei einem Dampf:CH₄-Molverhältnis von 4 zeigt.

16. Verwendung nach einem der Ansprüche 12 bis 14, wobei der Katalysator eine katalytische Aktivität von mindestens 40 kg CH₄-Umsetzung pro Kilogramm Katalysator pro Stunde bei einer Reaktionstemperatur von 600°C und einer Verweilzeit von 0,0045 s in einem aus CH₄ : H₂O : H₂ : N₂ in einem Verhältnis von 1 : 2,761 : 0,200 : 1,965 bestehenden Gasgemisch bei einem Dampf:CH₄-Verhältnis von 3 zeigt.

17. Verwendung nach einem der Ansprüche 12 bis 14, wobei der Katalysator eine CH₄-Umsetzung zeigt, die zu einem Spaltgas führt, das mindestens 98 Vol.- % H₂ mit einem Sorptionsmittel/Katalysator-Gewichtsverhältnis von 3:1 bei einer Reaktionstemperatur von 600°C, einem Druck von 1 bar und einem Dampf/CH₄-Verhältnis von 4 umfasst, oder
wobei der Katalysator eine katalytische Leistung von mindestens 14 g CO₂/ 100 g Gemisch aus Sorptionsmittel und Katalysator für mindestens 30 Zyklen im multizyklischen Reformierungsprozess bei 650°C mit einem Dampf/CH₄-Verhältnis von 3 zeigt, wobei das Sorptionsmittel 30 Gew.-% CaO umfasst und das Sorptionsmittel/Katalysator-Gewichtsverhältnis 3:2 beträgt, und wobei nach jedem Reformierungsprozess eine Regenerierung des Katalysators bei einer Temperatur von 850°C in einem H₂O, N₂ und H₂ umfassenden Gasgemisch durchgeführt wird.

## Revendications

1. Catalyseur de vaporeformage apte à être fluidisée, comprenant un matériau de support chargé d'un matériau catalytiquement actif,
le matériau de support étant un mélange de particules d'un oxyde métallique mixte basique comprenant du MgO-Al₂O₃ à une répartition granulométrique dans la plage de 0,05 à 0,3 mm,
le matériau catalytiquement actif étant un oxyde de nickel, et
le catalyseur présentant une superficie spécifique d'au moins 20 m²/g ou plus.

2. Catalyseur selon la revendication 1, le matériau de support étant un oxyde métallique mixte basique présentant une répartition granulométrique dans la plage de 0,1 à 0,25 mm.

3. Catalyseur selon l'une des revendications précédentes, le matériau de support comprenant ou étant composé d'un oxyde métallique mixte basique modifié, qui peut être obtenu par imprégnation de précurseurs d'oxyde métallique mixte basique avec un agent modificateur choisi dans le groupe constitué par le γ-AIO(OH), Al(NO₃)₃ × 9 H₂O et leurs mélanges, et par traitement thermique des précurseurs d'oxyde métallique mixte basique imprégnés.

4. Catalyseur selon la revendication 3, le matériau de support étant un mélange, de préférence un mélange à 1:1 (p/p), de deux oxydes métalliques mixtes basiques, au moins l'un des deux oxydes métalliques mixtes basiques ayant été modifié en utilisant du γ-AlO(OH) ou Al(NO₃)₃ × 9 H₂O comme agent modificateur, et les deux oxydes métalliques mixtes présentant un rapport (p/p) de 1:9 à 9:1, de préférence de 7:3 à 3:7, de manière plus préférée de 6:4 à 4:6 et plus préférablement de 1:1.

5. Catalyseur selon l'une des revendications précédentes, le matériau support présentant une densité apparente de 0,5 à 1,3 kg/L.

6. Catalyseur selon l'une des revendications précédentes, l'oxyde métallique mixte basique du matériau de support comprenant du MgO en une quantité de 50 à 80% en poids et du Al₂O₃ en une quantité de 20 à 50% en poids par rapport à la masse du matériau de support.

7. Catalyseur selon l'une des revendications précédentes, le matériau catalytiquement actif étant du NiO et le catalyseur comprenant 10 à 60% en poids, de préférence 20 à 60% en poids, plus préférablement 20 à 50% en poids du matériau catalytiquement actif par rapport à la masse du matériau de support.

8. Catalyseur selon la revendication 7, le catalyseur comprenant de 20 à 30% en poids ou de 40 et 50% en poids du matériau catalytiquement actif par rapport à la masse du matériau de support.

9. Catalyseur selon l'une des revendications précédentes, le matériau catalytiquement actif étant déposé sous forme de particules sur le matériau de support, les particules présentant une taille primaire comprise entre 5 et 50 nm.

10. Catalyseur selon l'une des revendications précédentes, le catalyseur présentant une superficie spécifique de 20 m²/g ou plus après 2h à l'air ambiant à une température de 750°C.

11. Catalyseur selon l'une des revendications précédentes, le catalyseur présentant une densité apparente de 0,4 à 1,4 kg/L.

12. Utilisation du catalyseur selon l'une des revendications précédentes dans le vaporeformage de méthane, de préférence à une température opératoire de 550 à 650°C, plus préférablement dans le vaporeformage et la régénération multicyclique.

13. Utilisation selon la revendication 12, un réacteur à lit fluidisé étant utilisé pour le vaporeformage de méthane, un sorbant de CO₂ inorganique étant de préférence utilisé conjointement avec le catalyseur.

14. Utilisation selon la revendication 12 ou 13, le catalyseur étant utilisé conjointement avec un sorbant de CO₂ inorganique, le sorbant de CO₂ inorganique comprenant de préférence du CaO et de l'alumine et/ou de l'oxyde de cérium, plus préférablement de 30 à 40% en poids de CaO et le reste d'alumine, et le rapport pondéral sorbant/catalyseur étant dans la plage de 1:1 à 5:1.

15. Utilisation selon l'une des revendications 12 à 14, le catalyseur présentant une activité catalytique d'au moins 40 kg de conversion de CH₄ par kilogramme de catalyseur par heure à une température de réaction de 600°C et à un temps de séjour de 0,0045 s dans un mélange gazeux composé de CH₄ : H₂O : H₂ : N₂ dans un rapport molaire de 1 : 3,676 : 0,267 : 2,457 à un rapport molaire vapeur : CH₄ de 4.

16. Utilisation selon l'une des revendications 12 à 14, le catalyseur présentant une activité catalytique d'au moins 40 kg de conversion de CH₄ par kilogramme de catalyseur par heure à une température de réaction de 600°C et à un temps de séjour de 0,0045 s dans un mélange gazeux composé de CH₄ : H₂O : H₂ : N₂ dans un rapport de 1 : 2,761 : 0,200 : 1,965 à un rapport vapeur : CH₄ de 3.

17. Utilisation selon l'une des revendications 12 à 14, le catalyseur présentant une conversion de CH₄ conduisant à un gaz produit comprenant au moins 98% en volume de H₂ avec un rapport pondéral sorbant/catalyseur de 3 : 1 à une température de réaction de 600°C, une pression de 1 bar et un rapport vapeur/CH₄ de 4, ou
le catalyseur présentant une performance catalytique d'au moins 14 g de CO₂/ 100 g de mélange de sorbant et de catalyseur pendant au moins 30 cycles dans une opération de reformage multicyclique à 650°C avec un rapport vapeur/CH₄ de 3, le sorbant comprenant 30% en poids de CaO, et le rapport pondéral sorbant/catalyseur étant de 3 : 2, et une régénération du catalyseur étant effectuée après chaque opération de reformage à une température de 850°C dans un mélange gazeux comprenant du H₂O, N₂ et H₂.
